# EUROPÄISCHE PATENTSCHRIFT

(11) **EP 2 585 390 B1**
(45) Veröffentlichungstag und Bekanntmachung des Hinweises auf die Patenterteilung: **14.05.2014**
(21) Anmeldenummer: 11757148.9
(22) Anmeldetag: 27.06.2011
(51) Int. Cl.: B65G 45/16

(54) **SEGMENTKÖRPER FÜR EINEN FÖRDERGUTABSTREIFER**
SEGMENT BODY FOR A CONVEYOR BELT SCRAPER
CORPS DE SEGMENT POUR UN RACLOIR DE COURROIE TRANSPORTEUSE

(30) Priorität: 28.06.2010 DE 102010030620
(43) Veröffentlichungstag der Anmeldung: 01.05.2013
(73) Patentinhaber: Rema Tip Top GmbH, 85586 Poing (DE)
(72) Erfinder: PUCHALLA, Adam, 45772 Marl (DE)
(74) Vertreter: MERH-IP Matias Erny Reichl Hoffmann
(86) Internationale Anmeldenummer: PCT/DE2011/001394
(87) Internationale Veröffentlichungsnummer: WO 2012/010141

(56) Entgegenhaltungen:
- EP-A1- 1 020 379
- WO-A1-2010/029482
- DE-U1- 29 500 659
- US-A- 3 994 388
- US-A- 5 797 477
- US-B1- 6 315 105

## Beschreibung

Die vorliegende Erfindung betrifft einen Fördergurtabstreifer, insbesondere einen Segmentkörper für einen Fördergurtabstreifer, der eine einfache Montage auf dem zugehörigen Träger ermöglicht und eine hohe Verschleißresistenz aufweist.

Aus dem Stand der Technik ist eine Vielzahl von Fördergurtabstreifern bekannt. Diese dienen insbesondere zur Reinigung von Fördergurten an der Trommel oder im Untertrum direkt hinter der Trommel auf der Strecke während des Betriebs. Hierbei erfolgt die Reinigung des Fördergurts mechanisch, d. h. ein Abstreifer wird gegen den umlaufenden Fördergurt gepresst, wobei der anhängende Schmutz von dem Abstreifer abgetrennt und zu einer Seite hin abgeführt wird. Dabei werden je nach Anwendungszweck oder der Größe der benötigten Anpresskraft unterschiedliche Prinzipien für das Bereitstellen der Anpresskraft des Abstreifers am Fördergurt eingesetzt.

So werden häufig eine Vielzahl von elastischen Abstreifelementen über die Breite des Fördergurts eingesetzt, die während der Montage so weit in Richtung des Fördergurts vertikal verfahren werden, dass diese sich elastisch verformen und damit eine Anpresskraft auf den Fördergurt ausüben. Die Abstreifelemente müssen jedoch an mehreren Stellen sehr aufwändig an dem Träger des Fördergurtabstreifers montiert werden, bzw. der Träger benötigt eine spezielle aufwändige Konstruktion, wodurch sich die Herstellungskosten erhöhen.

Um die Montage der Abstreifer zu vereinfachen, offenbart beispielsweise die Druckschrift DE 9312877U1 eine speziell geformte Trägerleiste mit Einstecktaschen zur leichteren Aufnahme der Abstreiferelemente und einer Schutzleiste auf der gegenüberliegenden Seite. Desweiteren weisen die Abstreiferelemente selbst einen von der Trägerleiste nach oben gebogenen Verlauf auf um dem Abstreifer ein Federelement zu verleihen. Des Weiteren ist der Abstreifer mit einem eingegossenen Federblech zur Erhöhung der Flexibilität versehen.

Es ist jedoch ein Nachteil dieses Fördergurtabstreifers, dass speziell gefertigte Trägerleisten benötigt werden. Des Weiteren kommt es im Betrieb immer wieder zu Überlastungen der Abstreiferelemente, weil beispielsweise eine Fördergurtverbindung oder eine Beschädigung des Fördergurtes auf die Abstreiferelemente kurzfristig wirkt. Dies kann zu impulsartigen Verdrehungen bzw. ruckartigen Nachgeben der Abstreiferelemente führen, was wiederum den Verschleiß der Abstreiferelemente erhöht und die Lebensdauer verkürzt.

EP 1020 379 A1 beschreibt einen Fördergurtabstreifer, der dazu geeignet ist, auf einem Querholm eines Fördergurtreinigers befestigt zu werden. Der Fördergurtabstreifer weist einen Abstreifer auf, der einen Fuß und eine Spitze mit einer Abstreifkante hat. Der Abstreifer ist aus einem elastischen Material geformt.

US 5 797 477 A beschreibt eine Fördergurtabstreiferanordnung, die dazu geeignet ist, eine Oberfläche eines Fördergurtes zu reinigen. Der Fördergurtabstreifer weist eine Montagebasis mit einem ersten Montageelement und einem zweiten Montageelement auf. Ein Abstreifer hat ein Montageelement und eine Abstreifkante und ist lösbar mit der Montagebasis über ein Zurückhaltearmelement und eine beabstandetes Unterstützungsarmelement verbunden. Dieses Dokument offenbart einen Segmentkörper gemäß dem Oberbegriff des Anspruchs 1.

US 3 994 388 A beschreibt einen Förderbandreiniger, der als mechanischer Reiniger eines Endlosförderbandes herangezogen wird. Eine jede Abstreifervorrichtung weist einen langgezogenen Arm auf, der drehbar an einem Drehzapfen einer Klammervorrichtung gelagert ist. Der Abstreifer ist an einem Ende des Arms befestigt ist und an einer Seite des Drehzapfens angeordnet. Ein einstellbarer Anschlag ist zwischen der Klammervorrichtung und dem Arm auf der anderen Seite des Drehzapfens angeordnet, um die Drehbewegung des Arms in eine Richtung zu begrenzen.

US 6 315 105 B1 beschreibt eine Förderbandabstreifvorrichtung mit einem Abstreifer, dessen Abstreifkante gegen ein Förderband vorgespannt ist. Der Abstreifer ist an einer Basis gelagert und hat einen Steg, der sich von der Basis zu der Abstreifkante erstreckt. Der Steg weist eine Nut auf, die parallel zu der Abstreifkante angeordnet ist, um einen Spannbereich an einem verengten Bereich des Stegs zu bilden.

Es ist daher eine Aufgabe der vorliegenden Erfindung einen verbesserten Segmentkörper für Fördergurtabstreifer bereitzustellen, der eine höhere Verschleißresistenz und eine vereinfachte Konstruktion aufweist. Es ist eine weitere Aufgabe der Erfindung einen verbesserten Segmentkörper bereitzustellen, der eine einfachere Montage an dem Segmentträger bei einer vereinfachten Konstruktion des verwendeten Segmentträgers ermöglicht.

Diese Aufgabe wird durch die Gegenstände gemäß den Merkmalen des Anspruchs 1 gelöst. Vorteilhafte Ausgestaltungen und bevorzugte Ausführungsbeispiele der Erfindung sind in den Unteransprüchen angegeben.

Erfindungsgemäß umfasst der Segmentkörper für einen Fördergurtabstreifer gemäß der vorliegenden Erfindung ein plattenförmig ausgebildetes Montageelement, das mit einem ebenen Aufstandsprofil eines Segmentträgers verbindbar ist. Segmentträger sind beispielsweise Vierkantstahlträger mit einem I-Profil (sog. Doppel-T-Träger), die entlang ihrer Längsachse mehrere Segmentkörper aufnehmen können. Unter einem plattenförmigen Element im Sinne dieser Erfindung wird ein flächiges Bauteil verstanden, d.h. mit einer im Vergleich zur Länge und Breite geringen Höhe, wobei das Bauteil zumindest eine ebene untere Aufstandsfläche aufweist.

Der Segmentkörper umfasst weiterhin einen Trägerabschnitt, wobei der Trägerabschnitt über einen Stützbereich auf einem ersten Endbereich des Montageelements angeformt ist. An dem Stützbereich kann ein Gurtabstreiferelement befestigt sein oder der Stützbereich kann selbst durch seine Form als Abstreifer ausgebildet sein. Weiterhin bildet eine Unterseite des Trägerabschnitts mit einem gegenüberliegenden Abschnitt des Montageelements einen Hohlkörper, so dass der Trägerabschnitt über den Stützbereich federnd auf dem Montageelement gelagert ist und somit einen ersten Dämpfungsmechanismus bildet. Diese Unterseite des Trägerabschnitts kann an den Stützbereich angrenzen. Vorzugsweise weist der gebildete Hohlkörper einen U- oder parabelförmigem Querschnitt auf. Der Hohlkörper kann in Abhängigkeit von der Form und Oberflächenstruktur der ihn bildenden Grenzflächen des Trägerabschnitts, des Stützbereichs und des Montageelements auch einen anderen Querschnitt aufweisen.

Der Segmentkörper weist somit eine Ausnehmung zwischen seinem unteren Montageabschnitt und einem oberen Trägerabschnitt auf. Der so über dem Montageelement angeordnete, federnd gelagerte Trägerabschnitt kann auf diese Weise eine Wipp- oder Federbewegung in Richtung des Montageelements ausführen, mit dem Stützbereich als Wipp- bzw. Federachse, um dadurch kurzfristige oder ruckartige Überlastungen oder Schläge durch das Förderband abzudämpfen. Der Stützbereich überträgt hierbei die Belastungen des Förderbandes an das Montageelement, das tragstabil auf dem Segmentträger befestigt ist.

Weiterhin weist der Trägerabschnitt an der Unterseite des Trägerabschnitts, d.h. die Unterseite die an den Hohlkörper angrenzt, mindestens eine Einstecktasche auf, die geeignet ist, ein Federelement aufzunehmen um einen zweiten Dämpfungsmechanismus auszubilden. Somit verfügt der erfindungsgemäße Segmentkörper über einen doppelten Dämpfungsmechanismus, um kurzfristige Belastungsspitzen, Stöße und ruckartige Kraftübertragungen auf den Segmentkörper effektiv zu dämpfen, um dadurch den Verschleiß des Segmentkörpers zu mindern und dessen Lebensdauer zu erhöhen. Hierbei sind beide Dämpfungsmechanismen konstruktiv unterschiedlich gelöst, einmal durch Schaffen eines Hohlkörpers, so dass der Trägerabschnitt über einen definierten Stützbereich an das Montageelement angeformt ist und gleichzeitig über diesen Stützbereich federnd gelagert ist, und andererseits durch Vorsehen einer Einstecktasche, die geeignet ist, ein Federelement aufzunehmen, das im Wesentlichen senkrecht in den Hohlkörper mündet und auf dem Montageelement aufsetzt.

Weiterhin kann der Segmentkörper als das Federelement eine in der Einstecktasche auswechselbar eingesteckte Stahlfeder umfassen, die an dem gegenüberliegenden Abschnitt des Montageelements aufsetzt. Das Montageelement kann an dieser Stelle eine Aussparung aufweisen, die so bemessen ist, die Stahlfeder verrutschsicher aufzunehmen. Mit der in der Einstecktasche angebrachten Stahlfeder kann die Dämpfungsstärke über die Stärke der Stahlfeder beliebig angepasst werden. Zudem werden ruckartige Stöße oder kurzfristige Überbelastungen überwiegend von dem auswechselbaren Verschleißteil aufgenommen, so dass das Material des Segmentkörpers geschont und dessen Lebensdauer erhöht wird. Dieser zweite Dämpfungsmechanismus verstärkt den ersten Dämpfungsmechanismus, hat aber gleichzeitig den Vorteil, dass die Stärke des in die Einstecktasche aufzunehmenden Federelements nach Bedarf variiert und an geänderte Betriebsbedingungen angepasst werden kann, so dass die Gesamtstärke des Dämpfungsmechanismus einstellbar ist.

Darüber hinaus stellen die zwei Dämpfungsmechanismus einen besonders leistungsstarken Energiespeicher dar, mittels dessen die eingebrachte Vorspannkraft in den ersten und zweiten Dämpfungsmechanismen gespeichert werden und im Betrieb wieder quasi-reversibel in den Abstreifer und somit in Richtung des Fördergurtes als Anpresskraft eingeleitet werden kann um eine hohe Reinigungskraft sicherzustellen. Damit ermöglicht der erfindungsgemäße Doppeldämpfungsmechanismus neben der Dämpfungsfunktion eine einfache und variable Einstellung der Anpresskraft mittels der Wahl einer geeigneten Stärke oder Dimensionierung der eingesteckten Federelemente.

Zudem stellt das einzubringende Federelement in der Einstecktasche ein Verschleißelement dar, dass in regelmäßigen Abständen ausgetauscht werden kann, so dass nur ein vergleichsweise günstiges Bauteil wie das Federelement bei Verschleiß gewechselt werden muss, während der Segmentkörper weiter verwendet werden kann.

Die Einstecktasche befindet sich vorzugsweise an einem zweiten Endbereich des Montageelements, das dem ersten Endbereich und damit dem Stützbereich gegenüber liegt, um damit einen möglichst langen Hebel zur Unterstützung der Dämpfungsbewegung des ersten Federelements zu ermöglichen.

An der angrenzenden Unterseite des Trägerabschnitts können zwei Einstecktaschen angebracht sein, um dort jeweils ein Federelement aufzunehmen, da dies zu einer besonders vorteilhaften gleichmäßigen Druckverteilung und Stoßdämpfung führt. Es können auch drei Einstecktaschen neben einander angeordnet um den Dämpfungsmechanismus mittels dreier Federn zu verstärken.

Der Segmentkörper der vorliegenden Erfindung kann weiterhin mit dem Segmentträger formschlüssig und/oder kraftschlüssig verbunden werden. So können an einem zweiten Endbereich des Montageelements, der dem ersten Endbereich gegenüber liegt, Systembohrungen angebracht werden, um das Montageelement mit dem ebenen Aufstandsprofil eines Segmentträgers kraftschlüssig zu verbinden. Diese Systembohrungen sind gleich beabstandet wie die entsprechenden Systembohrungen des Segmentträgers, beispielsweise des Stahlträgers, so dass mittels eines Befestigungsmittels, wie beispielsweise einer Schraube, das Montageelement über die Systembohrungen an dem Stahlträger kraftschlüssig verbunden werden kann.

Weiterhin weist ein erster Endbereich des Montageelements ein angeformtes U-förmiges Verbindungselement auf, das geeignet ist, das Montageelement mit einer Kante des ebenen Aufstandsprofils des Segmentträgers formschlüssig zu verbinden. Dies ist besonders vorteilhaft, um den oft mehrere Kilo schweren Segmentkörper in einem ersten Schritt mittels der plattenförmigen Montageplatte auf dem Segmentträger abzustellen und anschließend mit dem U-förmiges Verbindungselement zu positionieren und zu sichern. Anschließend können die Systembohrungen der Montageplatte in einer Feinjustierung in eine überlappende Stellung mit den Systembohrungen des Segmentträgers gebracht werden, um den Segmentkörper mittels weiterer Befestigungsmittel kraftschlüssig mit dem Segmentträger zu verbinden.

Die plattenförmige Bodenplatte in Kombination mit den erfindungsgemäßen form- und/ oder kraftschlüssigen Verbindungsbereichen der Bodenplatte ermöglicht den Segmentkörper auf dem Segmentträger durch nur einen Arbeiter zu montieren, während bei den bisher aus dem Stand der Technik bekannten Befestigungsmechanismen, beispielsweise basierend auf zylinderförmigen Trägerleisten, zwei Arbeiter zur Montage und gleichzeitigen Sicherung des Segmentkörpers auf dem Segmentträger notwendig waren. Die plattenförmige Bodenplatte in Verbindung mit den formschlüssigen und/oder kraftschlüssigen Befestigungsmöglichkeiten ermöglicht zudem das Befestigen des Segmentkörpers auf herkömmlichen Stahlträgern, die eine besonders hohe Tragstabilität bei der Aufnahme von mehreren Segmentkörpern aufweisen und zudem in hoher Stückzahl produziert werden und damit kostengünstig erhältlich sind.

Der Segmentkörper kann weiterhin im Stützbereich eine Ausnehmung aufweisen. Beispielsweise kann die Ausnehmung zwischen dem Hohlkörper und einer Außenfläche des Trägerabschnitts, die auf der Seite des ersten Endbereichs des Montageelements liegt, angeordnet sein. Die Erfinder der vorliegenden Erfindung haben in aufwendigen Versuchsreihen festgestellt, dass eine derartig angebrachte Ausnehmung die Flexibilität und Dämpfungseigenschaften des Segmentkörpers vorteilhaft verbessert und damit zu einem geringeren Gesamtverschleiß führt. Besonders bevorzug ist es, wenn die Ausnehmung im Wesentlichen parallel zu einer Scheitellinie des Hohlkörpers mit U- oder parabelförmigem Querschnitt läuft. Mit anderen Worten ist die Ausnehmung zwischen dem Hohlkörper und der Außenseite des Segmentkörpers angebracht. Die Ausnehmung kann beispielsweise ein tunnelförmiges durchgehendes Loch entlang der Breite des Stützbereichs sein.

Für die Stabilität und Dämpfungseigenschaften des Segmentkörpers ist es besonders vorteilhaft, wenn dieser als ein einstückiges Bauteil ausgebildet ist. Der Segmentkörper kann aus einem elastischen Kunststoff, beispielsweise Polyurethan, bestehen. Vorzugsweise besteht der Segmentkörper mit dem Montageelement, dem Stützbereich und dem Trägerabschnitt aus einem homogenen Material.

Weiterhin kann der Trägerabschnitt auch gleichzeitig als Abstreifer und somit als Verschleißelement ausgebildet sein. In diesem Fall kann der Trägerabschnitt als sich verjüngender Körper mit einer konkav gekrümmten und einer hierzu gegenüberliegenden konvex gekrümmten Außenfläche ausgebildet sein, wobei die konkav gekrümmte Außenfläche über dem ersten und die konvex gekrümmte Außenfläche über dem zweiten Endbereich des Montageelements angeordnet ist. Weiterhin können die konkav gekrümmte und die konvex gekrümmte Außenfläche in einer geneigten bzw. abgeschrägten Außenfläche enden, die dann als Kontaktfläche an der Oberfläche der Fördertrommel positioniert und angepresst wird. Die verjüngende gekrümmte Form des Abstreifers ermöglicht eine besonders vorteilhafte Verteilung der durch den Gurt übertragenen Stoßkräfte sowie eine genaue Positionierung des Abstreifers an dem Fördergurt.

Weiterhin kann der Trägerabschnitt zweiteilig ausgebildet sein, mit einem ersten unteren Trägerabschnitt, der mit der Montageplatte über den Stützbereich in Verbindung steht und einem auswechselbar befestigten oberen Abstreiferelement als Verschleißteil. Der obere Abschnitt des Trägerabschnitts ist durch den Kontakt mit dem Förderband einer besonders hohen Abnutzung ausgesetzt. Eine zweiteilige Ausbildung des Trägerabschnitts mit einem oberen Verschleißteil, das auswechselbar an dem unteren Abschnitt des Trägerabschnitts befestigt ist, ermöglicht, nur den abgenutzten oberen Bereich auszutauschen und den unteren, nicht verschliessenen Abschnitt, wiederzuverwenden.

Der Trägerabschnitt kann einen Aufnahmebereich zur Kraftanleitung von wenigstens einem Verschleißelement umfassen. Beispielsweise kann in diesen Aufnahmebereich ein Abstreiferstab befestigt werden, wobei im Bereich eines Längsendes des Abstreiferstabs ein Spachtel angeformt ist, der an der Oberfläche des Fördergurtes als Abstreifer positioniert werden kann. Hierzu kann beispielsweise in den Trägerabschnitt ein Gewinde eingegossen werden, in dem der Abstreiferstab über dem Aufnahmebereich befestigt werden kann. Mit anderen Worten ist der Trägerabschnitt nicht selbst als Abstreifer ausgebildet, sondern dient als Aufnahmeträger für einen auswechselbar befestigten Abstreifer. Dies ist besonders vorteilhaft für den Einsatz als Segmentkörper im Untertrum des Förderbandes. Zusätzlich kann über die Wahl der Hebellängen zwischen dem Aufnahmebereich und dem Abstreifer eine Verstärkung der Anpresskraft realisiert werden.

Zur weiteren Verbesserung der Stabilität des Segmentkörpers kann eine Stahlplatte in den Montageabschnitt eingebettet sein. Vorzugsweise ist diese Stahlplatte eine Lochplatte.

Weiterhin kann gemäß der vorliegenden Erfindung ein Fördergurtabstreifer gebildet werden, indem auf einem Stahlträger eine Gruppe von Segmentkörpern angebracht wird, die jeweils mindestens ein Federelement in der Einstecktasche aufweisen und auf dem Stahlträger entlang dessen Längsachse nebeneinander angeordnet sind, wobei mittig angeordnete Segmentkörper Federelemente in den Einstecktaschen mit höherer Federstärke aufweisen als Segmentkörper, die außen angeordnet sind. Diese Anordnung ist besonders vorteilhaft, um die Gesamtlebensdauer des Fördergurtabstreifers zu erhöhen. Die Erfinder der vorliegenden Erfindung haben festgestellt, dass die Verschleißerscheinungen eines Fördergurtabstreifers, der mehrere Abstreifer enthält, in der Gurtmitte besonders hoch sind, und dort zu einer erhöhten Abnutzung der Abstreifer führt. Die vorliegende Erfindung erlaubt es, die Dämpfungseigenschaften der Abstreifer individuell einzustellen und diese so optimal an die Belastungsverteilung durch den Fördergurt anzupassen, um dadurch den Materialverschleiß zu reduzieren und die Lebensdauer der Abstreifer zu verbessern.

Zusammenfassend wird durch die vorliegende Erfindung ein Segmentkörper für einen Fördergurtabstreifer bzw. ein Abstreifer ermöglicht, der aufgrund seines kompakten und einfachen Aufbaus eine besonders einfache und schnelle Montage auf einem gängigen Stahlträger ermöglicht und zudem über zwei verschiedene, sich unterstützende Dämpfungsmechanismen verfügt, wobei ein Dämpfungsmechanismus über ein auswechselbar einsetzbares Federelement als Verschleißteil ausgebildet ist. Dadurch können insbesondere ruckartige Stöße, Schläge und kurzfristige Überlastungen zuverlässig gedämpft werden, um den Materialverschleiß zu reduzieren. Des Weiteren kann die eingebrachte Vorspannkraft in dem Doppel-Federelement gespeichert werden und im Betrieb wieder quasi-reversibel in den Abstreifer und somit in Richtung des Fördergurtes als Anpresskraft eingeleitet werden. Verschleißte Federelemente in den Einstecktaschen können einfach und schnell gewechselt werden, so dass der die Federelemente aufnehmende Segmentkörper wiederverwendet werden kann. Der einfache Gesamtaufbau der Segmentkörper ermöglicht diesen unter Verwendung gängiger Kunststoffgußverfahren als einteiliges Bauteil herzustellen. Der erfindungsgemäße Segmentkörper erlaubt den Einsatz sowohl als Abstreifer an der Fördertrommel als auch als Abstreifer am Untertrum.

Bevorzugte Ausführungsformen und weitere Details der vorliegenden Erfindung werden im Folgenden unter Bezugnahme auf die beigefügten schematischen Zeichnungen beispielhaft näher beschrieben.
- Fig. 1: zeigt eine Seitenansicht eines Segmentkörpers gemäß einem Ausführungsbeispiel der vorliegenden Erfindung;
- Fig. 2: zeigt eine Seitenansicht des Segmentkörpers aus Fig. 1 und illustriert schematisch den Einsatz des Segmentkörpers an der Trommel einer Fördergurtanlage;
- Fig. 3: zeigt eine Seitenansicht des Segmentkörpers gemäß Fig. 2 in einem stärker abgenutzten Zustand;
- Fig. 4A: zeigt eine Draufsicht einer Stahlplatte, die in ein Bodenelement eines Segmentkörpers gemäß einem Ausführungsbeispiel der vorliegenden Erfindung eingebettet ist;
- Fig. 4B: zeigt eine Seitenansicht der Stahlplatte aus Fig. 4A;
- Fig. 5: zeigt eine Seitenansicht eines Segmentkörpers gemäß einem weiteren Ausführungsbeispiel der vorliegenden Erfindung;
- Fig. 6: zeigt eine Seitenansicht eines Segmentkörpers aus Fig. 5 beim Einsatz am Untertrum in einem ungespannten Zustand; und
- Fig. 7: zeigt eine Seitenansicht eines Segmentkörpers aus Fig. 5 beim Einsatz am Untertrum in einem gespannten Zustand.

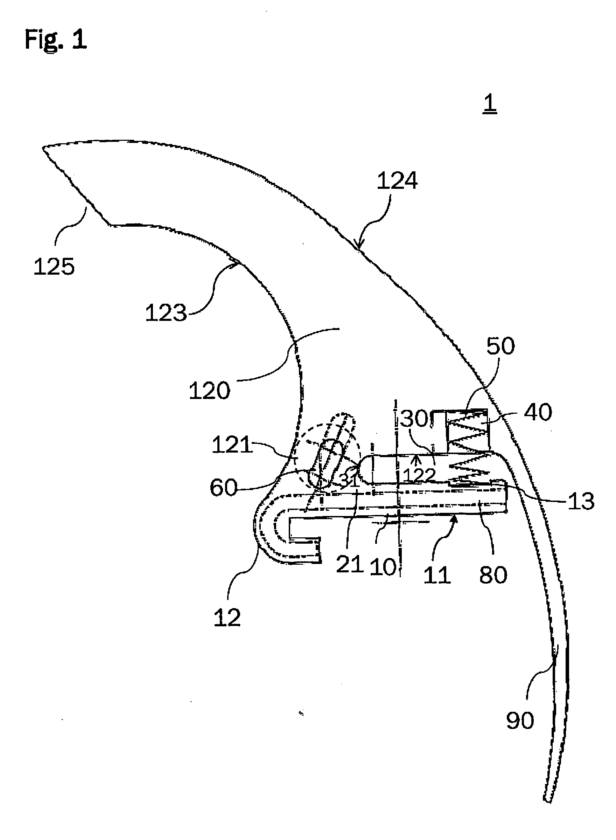

Fig. 1 zeigt eine Seitenansicht eines Segmentkörpers gemäß einem Ausführungsbeispiel der vorliegenden Erfindung. Der Segmentkörper 1 verfügt an seinem unteren Ende über ein plattenförmig ausgebildetes Montageelement 10, das mit einem ebenen Aufstandsprofil eines Segmentträgers (nicht gezeigt) verbindbar ist. Die Abmessungen des Montageelements 10 sind an die ebene Aufstandsfläche des verwendeten Segmentträgers, beispielsweise eines Doppel-T-Stahlträgers, angepasst. An dem linken Ende des Montageelements 10 ist ein U-förmiges Verbindungselement 12 angeordnet, das eine Kante des ebenen Aufstandsprofils eines Segmentträgers (nicht gezeigt) formschlüssig umgreifen kann, um beim Montieren des Segmentkörpers diesen auf dem Segmentträger in einem ersten Schritt zu positionieren und zu sichern.

Der Segmentkörper 1 umfasst weiterhin einen Trägerabschnitt 120, der über einem Stützbereich 121 auf einem ersten Endbereich des Montageelements 10 angeformt ist. Der Stützbereich ist durch die gestrichelte Kreislinie in Fig. 1 illustriert. Hierbei bildet eine an dem Stützbereich 121 angrenzende Unterseite 122 des Trägerabschnitts 120 mit einem gegenüberliegenden Abschnitt 11 des Montageelements 10 einen Hohlkörper 30, der einen U- oder parabelförmigen Querschnitt bildet, so dass der Trägerabschnitt 120 über den Stützbereich 121 federnd auf dem Montageelement 10 gelagert ist zur Ausbildung eines ersten Dämpfungsmechanismus, der gleichzeitig eine Anpresskraft an die zu reinigende Fördergurtoberfläche bewirkt.

Der Segmentkörper 1 in Fig. 1 ist einteilig aus Polyurethan, einem elastischen Kunststoff, gegossen. Der Trägerabschnitt 120 weist an der angrenzenden Unterseite 122 des Trägerabschnitts 120 zwei Einstecktaschen 40 auf, wobei in Fig. 1 nur die vordere Einstecktasche 40 gezeigt ist. In der Einstecktasche befindet sich eine Stahlfeder 50, die an dieser Stelle auswechselbar eingesteckt ist um einen zweiten Dämpfungsmechanismus zu bilden. Dieser zweite Dämpfungsmechanismus unterstützt den ersten Dämpfungsmechanismus gebildet durch den Hohlkörper 30 und den Stützbereich 121. Die Stahlfeder 50 steht im Wesentlichen senkrecht auf der Bodenplatte 10 auf. Die Bodenplatte 10 weist zur Aufnahme der Stahlfedern 50 jeweils eine kreisförmige Ausnahme 13 auf, um an dieser Stelle die Stahlfeder 50 verrutschsicher aufzunehmen.

Der Trägerabschnitt 120 ist als sich verjüngender Abstreifer ausgebildet, mit einer konkav gekrümmten 123 und einer hierzu gegenüberliegenden konvex gekrümmten 124 Außenfläche, wobei die konkav gekrümmte Außenfläche 123 über dem ersten und die konvex gekrümmte Außenfläche 124 über dem zweiten Endbereich des Montageelements 10 angeordnet ist. Die konkav 123 und konvex 124 gekrümmte Außenflächen münden in einer oberen Schrägkante 125, die an der Oberfläche des Fördergurtes (nicht gezeigt) positioniert wird, um von dort Verschmutzungen des Fördergurtes abzustreifen.

Schläge oder ruckartige Überlastungen, die auf den Abstreifer in Fig. 1 wirken, führen zu einer Feder- bzw. Wippbewegung des Trägerabschnitts 120 um eine zur Zeichenebene senkrechte Wippachse, die durch den Stützbereich 121 läuft. Diese Wippbewegung wird durch das Federelement 50 zusätzlich gedämpft. Durch diesen doppelten Dämpfungsmechanismus können zuverlässig kurzfristige Überlastungen über die Dämpfungsmechanismen abgefangen werden, um dadurch das Material des Segmentkörpers 1 zu schonen.

In dem Stützbereich 121 befindet sich weiterhin eine Ausnehmung 60, die die Bewegungsflexibilität des Segmentkörpers 1 bei Dämpfungsbewegungen erhöht und dadurch die Effizienz des Dämpfungsmechanismus verbessert. Die gestrichelte Linie deutet an, dass verschiedene Größen für die Ausnehmung 60 bei der Fertigung realisiert werden können, um die Flexibilität an verschiedene Betriebsbedingungen anzupassen.

Auf der Seite der Einstecktaschen ist an der unteren Längsseite des Segmentkörpers 1 ein Schutzlappen 90 angeformt, der die Montageplatte und den Dämpfungsmechanismus vor Verunreinigungen schützt. Die Breite des Schutzlappens 90 entspricht mindestens der Breite des Segmentkörpers 1, um die gesamte Breite des Montagekörpers vor Verschmutzung zu schützten.

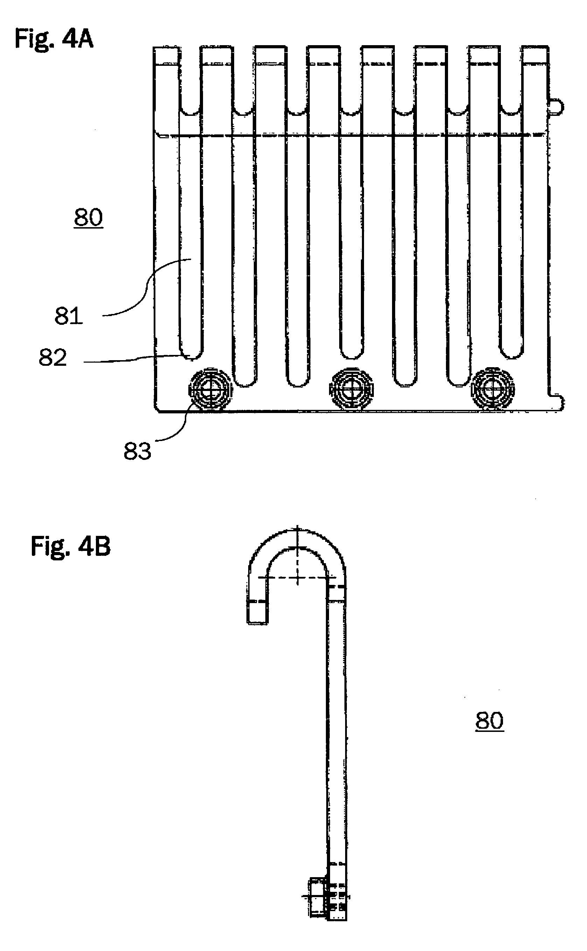

In das Montagelement 10 ist eine Stahlplatte 80 eingebettet, die ebenfalls an dem linken Endbereich U-förmig ausgebildet ist und in dem Verbindungselement 12 verläuft. Die Stahlplatte 80 wirkt stabilisierend gegen Verdrehungen. Fig. 4A zeigt eine Draufsicht der Stahlplatte 80. Bei der Stahlplatte 80 handelt es sich um eine Lochplatte 80 mit parallel angeordneten Langlöchern 81 mit abgerundeten Ecken 82. Die Stahlplatte 80 weist weiterhin Systembohrungen 83 auf, die gemäß den Systembohrungen auf dem Stahlträger und den Systembohrungen des Segmentträgers 1 beabstandet sind, um den Segmentträger 1 formschlüssig mit dem Stahlträger 100 zu verbinden. Der U-förmige Endbereich ist in der Seitenansicht der Fig. 4B gut sichtbar dargestellt.

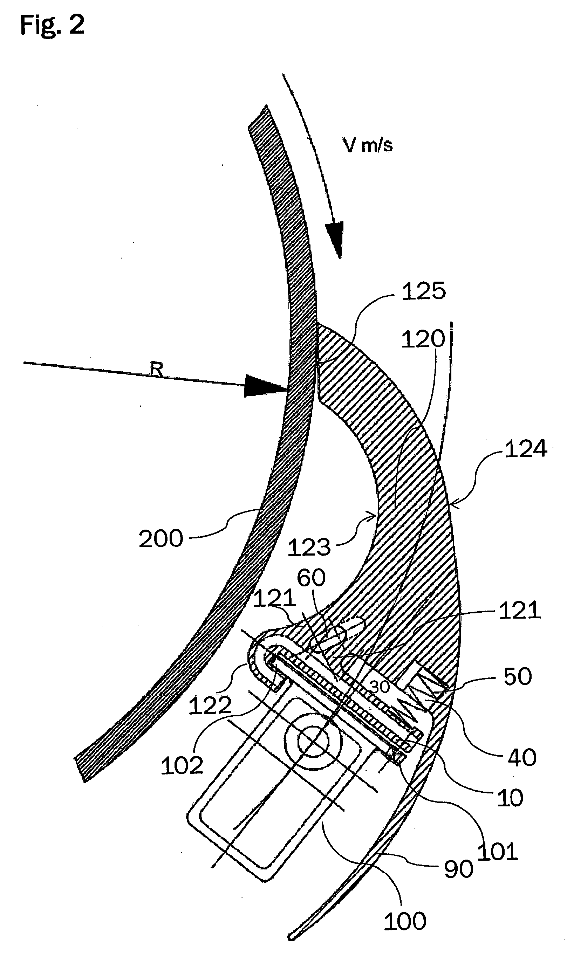

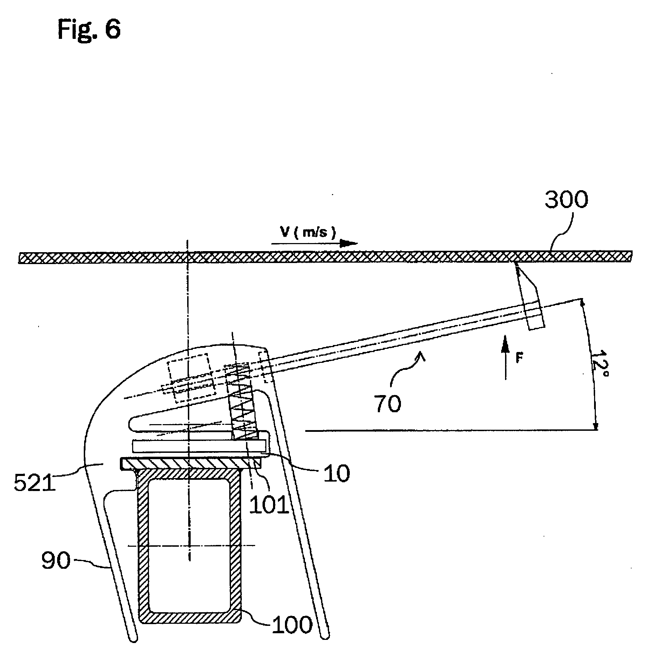

Fig. 2 zeigt eine Seitenansicht des Segmentkörpers aus Fig. 1 und illustriert schematisch den Einsatz des Segmentkörpers 1 an der Trommel 200 einer Fördergurtanlage. Die Trommel 200 bewegt sich im Uhrzeigersinn mit der Geschwindigkeit v. Fig. 2 zeigt insbesondere den Segmentkörper 120 im montierten Zustand auf einem Vierkantstahlträger 100 mit T-Profil mit. einer oberen kantförmigen Aufstandsplatte 101, auf der der Segmentkörper 1 linksseitig mit dem U-förmigen Verbindungselement 12 formschlüssig und rechtsseitig mittels Schrauben kraftschlüssig verbunden ist. Ein Fördergurtabstreifer besteht aus mehreren Segmentkörpern 1, die auf dem Stahlträger 100 gleichmäßig beabstandet nebeneinander angeordnet sind, abhängig von der Breite der Trommel 200 des Förderbandes (nicht gezeigt). Die obere Abstreiferkante 125 ist derart an der Trommel 200 positioniert, um dort vorhandene Verschmutzungen effizient abstreifen zu können. Neben der Dämpfungsfunktion stellen die beiden Dämpfungsmechanismen somit auch einen geeigneten Anpressdruck des Segmentkörpers an die Trommel 200 oder an das Förderband (vgl. Fig. 6) sicher. Durch entsprechende Positionierung der auf dem Segmentträger 100 montierten Segmentkörper an der Trommel 200 oder dem Förderband 300 (vgl. Fig. 6) entsteht eine Anpresskraft, die aufgrund des Kraftflusses innerhalb des Segmentkörpers eine Rückstellkraft bewirkt, die von dem ersten und dem zweiten Dämpfungsmechanismus ausgeübt wird. Aufgrund der eingestellten Rückstellkraft bewegt sich das Verschleißelement 120 immer in Richtung der Trommel 200, so dass deren Reinigung trotz Verschleiß sichergestellt ist.

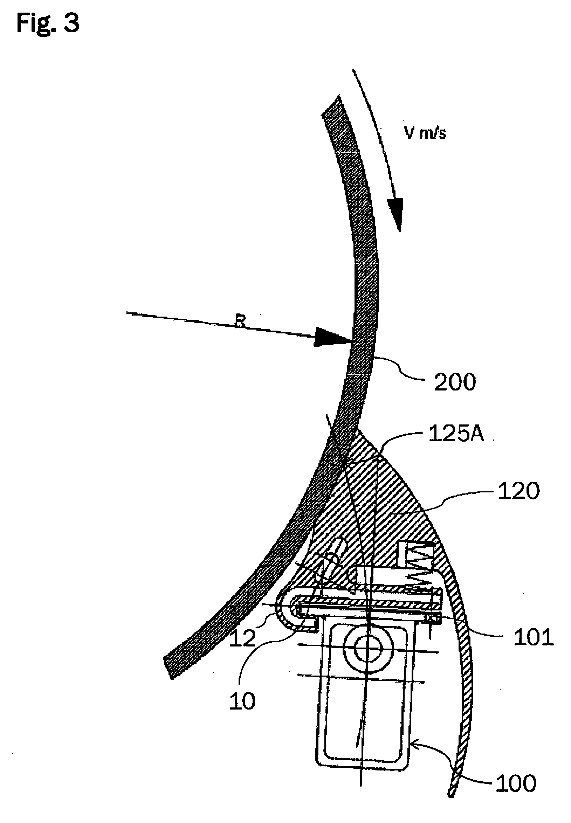

Fig. 3 zeigt eine Seitenansicht des Segmentkörpers gemäß Fig. 2 in einem stärker abgenutzten Zustand, bei dem der obere Bereich des Trägerabschnitts 120, insbesondere die obere Kante 125, bereits stark verschlissen ist. Das Verschleißelement 120 steht nun über eine Kontaktfläche 125A mit der Trommel 200 in Kontakt, wobei die Reibungskraft gegenüber dem Zustand aus Fig. 2 erhöht ist. Fig. 3 zeigt, dass der doppelte Dämpfungsmechanismus des erfindungsgemäßen Abstreifers auch in einem verschlissenen Zustand eine effektive Dämpfung und Anpresskraft ermöglicht. Aufgrund der eingestellten Rückstellkraft bewegt sich das Verschleißelement 120 immer in Richtung der Trommel 200, so dass deren Reinigung trotz Verschleiß sichergestellt ist.

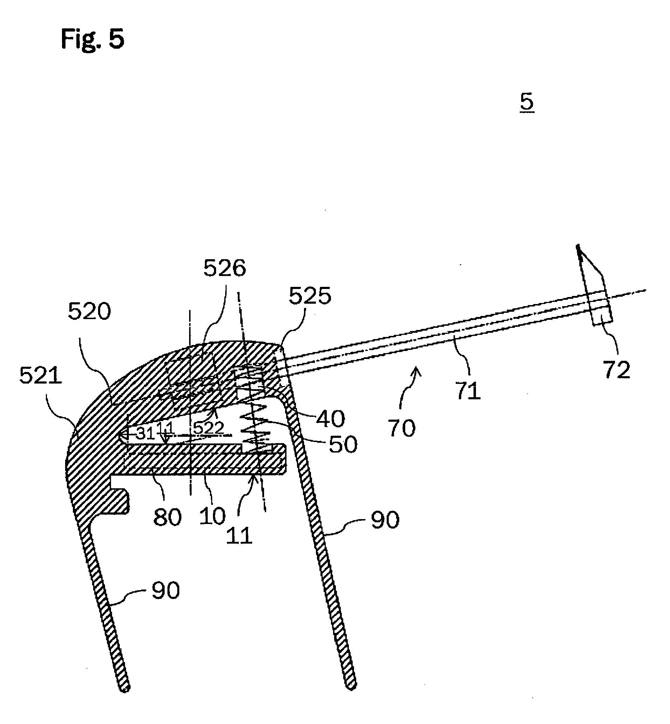

Bezug nehmend auf Fig. 5 ist eine Seitenansicht eines Segmentkörpers gemäß einem weiteren Ausführungsbeispiel der vorliegenden Erfindung dargestellt. Der Segmentkörper 5 unterscheidet sich von dem Segmentkörper 1 aus Fig. 1 im Wesentlichen dadurch, dass der Trägerabschnitt 520 nicht als Abstreifer ausgebildet ist, sondern einen Aufnahmebereich 525 zur Krafteinleitung von wenigstens einem Verschleißelement 70 umfasst. Das Verschleißelement 70 ist als Abstreiferstab 71 ausgebildet an dessen Längsende ein Spachtel 72 angeformt ist. Der Abstreiferstab 71 ist weiterhin derart in dem Aufnahmebereich 525 montiert, dass der Abstreiferstab 71 keine Bewegung in Längsrichtung ausführen kann. Weiterhin ist der Abstreiferstab 71 mittels einer Schraubverbindung mit einem Spachtelaufnehmer 526 drehfest, der beispielsweise als in das Trägerelement 520 eingegossenes Drehgewinde realisiert ist, verbunden. Der Spachtel 72 ist aus einem gehärteten Stahlwerkstoff geformt. Die Seitenansicht der Fig. 5 zeigt nur die vordere Stahlfeder 50. Der Abstreifer 5 verfügt über zwei baugleiche Stahlfedern 50, die parallel in benachbarten Taschen 40 eingesteckt sind. Die Ausführungen zur Wirkungsweise des Segmentkörpers 5, insbesondere der beiden Dämpfungsmechanismen, gelten entsprechend den vorstehend beschriebenen Ausführungen.

Fig. 5 zeigt weiterhin, wie der Aufnahmebereich 525 und der Abstreiferstab 71 in unbelastetem Zustand gegenüber der Horizontalen um einen Winkel geneigt ist. Der Winkel beträgt in einer bevorzugten Ausführungsform zwischen 10 und 45°. Ein weiterer Unterschied zu dem Segmentkörper aus Fig. 1 ist, dass der Segmentkörper 5 beidseitig angebrachte Schutzlappen 90 aufweist. Weiterhin verläuft die Stahlplatte 80 in einem linken Endbereich nicht U-förmig, wie in Fig. 1, sondern befindet sich nur in dem plattenförmigen Bereich der Montageplatte 10. Des Weiteren verläuft die Stahlfeder 50, die sich in der Einstecktasche 40 befindet, im ungespannten Zustand nicht exakt senkrecht zur Bodenplatte.

Fig. 6 zeigt eine Seitenansicht des Segmentkörpers 5 aus Fig. 5 beim Einsatz im Untertrum in einen ungespannten Zustand. Um einen Anpressdruck des Spachtels 72 auf den Fördergurt 300 auszuüben, wird der Stahlträger 100 mit den darauf montierten Abstreifern 5 vertikal in Richtung des Fördergurtes verfahren.

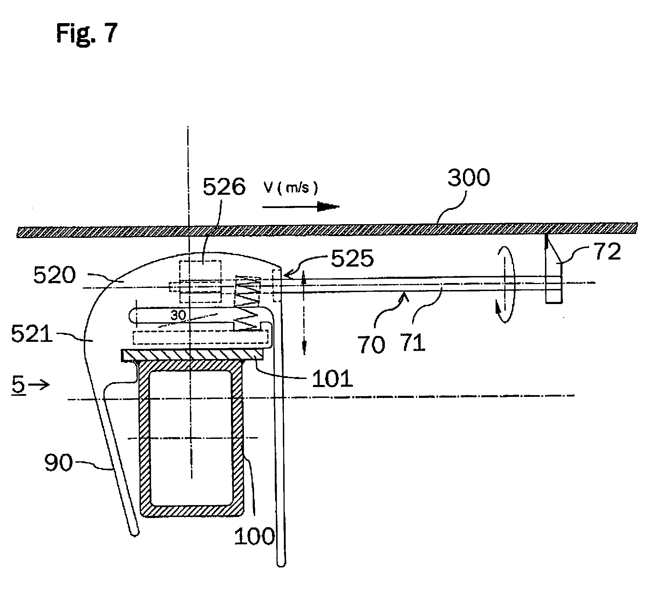

Fig. 7 zeigt eine Seitenansicht des erfindungsgemäßen Segmentkörpers 5 mit Abstreiferstab 71 und Spachtel 72 gemäß Fig. 5 im gespannten Zustand, nachdem der Stahlträger 100 mit montiertem Segmentkörper 5 im Untertrum vertikal in Richtung des Förderbandgurtes 300 verschoben wurde, so dass sich der Abstreiferstab 71 in der dargestellten gespannten Betriebsposition in einer im Wesentlichen horizontalen Stellung befindet. Eine geneigte Stellung bei einer weiteren Verschiebung des Fördergurtabstreifers in Richtung des Förderbandgurtes 300 ist ebenfalls möglich. In dieser gespannten Position befindet sich das in den Einstecktaschen 40 befindliche Federelement 50 in einer Position, die im Wesentlichen senkrecht zu der Bodenplatte und der Aufstandsfläche 101 des Segmentträgers ist. Sobald der Spachtel 72 mit dem Fördergurt 300 in Kontakt steht, wird eine Reaktionskraft über den Aufnahmebereich 525 des Segmentkörpers 5 in das Federelement 50 und den ersten Dämpfungsmechanismus eingeleitet und darin gespeichert.

## Patentansprüche

1. Segmentkörper für einen Fördergurtabstreifer, mit
- einem plattenförmig ausgebildetem Montageelement (10), das mit einem ebenen Aufstandsprofil (101) eines Segmentträgers (100) verbindbar ist;
- einem Trägerabschnitt (120; 520), wobei der Trägerabschnitt (120; 520) über einen Stützbereich (121; 521) auf einem ersten Endbereich des Montageelement (10) angeformt ist und eine Unterseite (122; 522) des Trägerabschnitts (120; 520) mit einem gegenüberliegenden Abschnitt (11) des Montageelements (10) einen Hohlkörper (30) bildet, so dass der Trägerabschnitt (120; 520) über den Stützbereich (121; 521) federnd auf dem Montageelement (10) gelagert ist zur Ausbildung eines ersten Dämpfungsmechanismus; und
- wobei der Trägerabschnitt (120; 520) an der Unterseite (122; 522) des Trägerabschnitts (120; 520) mindestens eine Einstecktasche (40) aufweist, die geeignet ist, ein Federelement (50) aufzunehmen zur Ausbildung eines zweiten Dämpfungsmechanismus,
**gekennzeichnet dadurch, dass**
- an dem ersten Endbereich des Montageelements (10) ein U-förmiges Verbindungselement (12) angeformt ist, das geeignet ist, das Montageelement (10) mit einer Kante (102) des ebenen Aufstandprofils (101) des Segmentträgers (100) formschlüssig zu verbinden.

2. Segmentkörper nach Anspruch 1, **dadurch gekennzeichnet, dass** ein zweiter Endbereich des Montageelements (10), der dem ersten Endbereich gegenüber liegt, Systembohrungen (83) aufweist, um das Montageelement (10) mit dem ebenen Aufstandsprofil (101) eines Segmentträgers (100) kraftschlüssig zu verbinden.

3. Segmentkörper nach zumindest einem der Ansprüche 1 bis 2, **dadurch gekennzeichnet, dass** der Stützbereich (121; 521) eine Ausnehmung (60) aufweist.

4. Segmentkörper nach Anspruch 3, **dadurch gekennzeichnet, dass** die Ausnehmung (60) zwischen dem Hohlkörper (30) und einer Außenfläche des Trägerabschnitts (120, 520), die auf der Seite des ersten Endbereichs des Montageelements (10) liegt, angeordnet ist.

5. Segmentkörper nach Anspruch 3, **dadurch gekennzeichnet, dass** die Ausnehmung (60) im Wesentlichen parallel zur einer Scheitellinie (31) des Hohlkörpers (30) mit U- oder parabelförmigen Querschnitt verläuft.

6. Segmentkörper nach zumindest einem der Ansprüche 1 bis 5, **dadurch gekennzeichnet, dass** dieser ein einstückiges Bauteil ist.

7. Segmentkörper nach zumindest einem der Ansprüche 1 bis 6, **dadurch gekennzeichnet, dass** der Segmentkörper (1, 5) eine in der Einstecktasche (40) auswechselbar eingesteckte Stahlfeder (50) umfasst, die an dem gegenüberliegenden Abschnitt (11) des Montageelements (10) aufsetzt, und das Montageelement (10) an dieser Stelle eine Aussparung (13) aufweist, die so bemessen ist, die Stahlfeder (50) verrutschsicher aufzunehmen.

8. Segmentkörper nach zumindest einem der Ansprüche 1 bis 7, **dadurch gekennzeichnet, dass** der Trägerabschnitt (120) als sich verjüngender Abstreifer ausgebildet ist, mit einer konkav gekrümmten (123) und einer hierzu gegenüberliegenden konvex gekrümmten (124) Außenfläche, wobei die konkav gekrümmte Außenfläche (123) über dem ersten und die konvex gekrümmte Außenfläche (124) über dem zweiten Endbereich des Montageelements (10) angeordnet ist.

9. Segmentkörper nach Anspruch 8, **dadurch gekennzeichnet, dass** der Trägerabschnitt (120) zweiteilig ausgebildet ist, mit einem ersten unteren Trägerabschnitt, der mit der Montageplatte (10) in Verbindung steht und einem auswechselbar befestigten Abstreiferelement.

10. Segmentkörper nach zumindest einem der Ansprüche 1 bis 9, **dadurch gekennzeichnet, dass** der Trägerabschnitt (520) einen Aufnahmebereich (525) zur Krafteinleitung von wenigstens einem Verschleißelement (70) umfasst.

11. Segmentkörper nach Anspruch 10, **dadurch gekennzeichnet, dass** ein Abstreiferstab (71) in dem Aufnahmebereich (525) befestigt wird, wobei im Bereich eines Längsendes des Abstreiferstabs (71) eine Spachtel (72) angeformt ist.

12. Segmentkörper nach zumindest einem der Ansprüche 1 bis 11, **dadurch gekennzeichnet, dass** eine Stahlplatte (80) in den Montageabschnitt (10) eingebettet ist.

13. Segmentkörper nach zumindest einem der Ansprüche 1 bis 12, **dadurch gekennzeichnet, dass** der Hohlkörper (30) einen U- oder parabelförmigen Querschnitt aufweist.

14. Ein Fördergurtabstreifer, mit einem Stahlträger und einer Gruppe von Segmentkörpern (1; 5) nach einem der Ansprüche 1 bis 13, wobei die Segmentkörper (1; 5) jeweils mindestens ein Federelement (50) in der Einstecktasche (40) aufweisen und auf dem Stahlträger (100) entlang dessen Längsachse nebeneinander angeordnet sind, wobei mittig angeordnete Segmentkörper (1; 5) Federelemente (50) mit höherer Federstärke aufweisen als Segmentkörper (1; 5), die außen angeordnet sind.

## Claims

1. A segment body for a conveyor belt wiper including
- a plate-shaped formed mounting element (10) connectable to a flat contact profile (101) of a segment support (100);
- a support portion (120; 520), wherein the support portion (120; 520) is formed over a supporting area (121; 521) on a first end region of the mounting element (10), and a bottom (122; 522) of the support portion (120; 520) forms a hollow body (30) with an opposing portion (11) of the mounting element (10), such that the support portion (120; 520) is resiliently supported on the mounting element (10) via the supporting area (121; 521) for forming a first damping mechanism; and
- wherein the support portion (120; 520) has at least one insertion pocket (40) at the bottom (122; 522) of the support portion (120; 520), which is suitable for receiving a spring element (50) for forming a second damping mechanism,
**characterized in that**
- a U-shaped connecting element (12) is formed on the first end region of the mounting element (10), which is suitable for form-fit connecting the mounting element (10) to an edge (102) of the flat contact profile (101) of the segment support (100).

2. The segment body according to claim 1, **characterized in that** a second end region of the mounting element (10) opposing the first end region has system bores (83) in order to force-fit connect the mounting element (10) to the flat contact profile (101) of a segment support (100).

3. The segment body according to at least one of claims 1 to 2, **characterized in that** the supporting area (121; 521) has a recess (60).

4. The segment body according to claim 3, **characterized in that** the recess (60) is disposed between the hollow body (30) and an exterior surface of the support portion (120, 520), which is situated on the side of the first end region of the mounting element (10).

5. The segment body according to claim 3, **characterized in that** the recess (60) extends substantially parallel to a crown line (31) of the hollow body (30) with U-shaped or parabolic cross-section.

6. The segment body according to at least one of claims 1 to 5, **characterized in that** it is a one-piece component.

7. The segment body according to at least one of claims 1 to 6, **characterized in that** the segment body (1, 5) includes a steel spring (50) exchangeably inserted in the insertion pocket (40), which fits on the opposing portion (11) of the mounting element (10), and the mounting element (10) has a recess (13) at this place, which is dimensioned to receive the steel spring (50) in slip-resistant manner.

8. The segment body according to at least one of claims 1 to 7, **characterized in that** the support portion (120) is formed as a tapering wiper with a concavely curved (123) and a convexly curved (124) exterior surface opposing hereto, wherein the concavely curved exterior surface (123) is disposed above the first and the convexly curved exterior surface (124) is disposed above the second end region of the mounting element (10).

9. The segment body according to claim 8, **characterized in that** the support portion (120) is two-part formed, including a first lower support portion connected to the mounting plate (10) and an exchangeably attached wiper element.

10. The segment body according to at least one of claims 1 to 9, **characterized in that** the support portion (520) includes a receiving area (525) for application of force from at least one wear element (70).

11. The segment body according to claim 10, **characterized in that** a wiper rod (71) is attached in the receiving area (525), wherein a scraper (72) is formed in the region of a longitudinal end of the wiper rod (71).

12. The segment body according to at least one of claims 1 to 11, **characterized in that** a steel plate (80) is embedded in the mounting portion (10).

13. The segment body according to at least one of claims 1 to 12, **characterized in that** the hollow body (30) has a U-shaped or parabolic cross-section.

14. A conveyor belt wiper including a steel support and a group of segment bodies (1; 5) according to any one of claims 1 to 13, wherein the segment bodies (1; 5) each have at least one spring element (50) in the insertion pocket (40) and are disposed next to each other on the steel support (100) along the longitudinal axis thereof, wherein centrally disposed segment bodies (1; 5) have spring elements (50) with higher spring strength than segment bodies (1; 5) disposed at the outside.

## Revendications

1. Corps de segment pour un racloir de courroie transporteuse, comportant
- un élément de montage (101) réalisé en forme de plaque et susceptible d'être relié à un profilé de pose (10) plan d'un support de segment (100),
- une partie support (120 ; 520), la partie support (120 ; 520) étant conformée sur une première zone d'extrémité de l'élément de montage (10) par l'intermédiaire d'une zone d'appui (121 ; 521), et un côté inférieur (122 ; 522) de la partie support (120 ; 520) formant avec une partie opposée (11) de l'élément de montage (10) un corps creux (30), de telle sorte que la partie support (120 ; 520) est montée élastiquement sur l'élément de montage (10) par l'intermédiaire de la zone d'appui (121 ; 521) afin de former un premier mécanisme d'amortissement ; et
- la partie support (120 ; 520) comportant sur con côté inférieur (122 ; 522) de la partie support (120 ; 520) au moins une poche d'insertion (40) apte à recevoir un élément ressort (50) afin de former un second mécanisme d'amortissement,
**caractérisé en ce que**
- un élément de liaison (12) en forme de U est conformé sur la première zone d'extrémité de l'élément de montage (10), qui est apte à relier par coopération de formes l'élément de montage (10) à une arête (102) du profilé de pose (101) plan du support de segment (100).

2. Corps de segment selon la revendication 1, **caractérisé en ce qu'**une seconde zone d'extrémité de l'élément de montage (10) qui est à l'opposé de la première zone d'extrémité présente des alésages de système (83) afin de relier par coopération de forces l'élément de montage (10) au profilé de pose (101) plan d'un support de segment (100).

3. Corps de segment selon l'une au moins des revendications 1 à 2, **caractérisé en ce que** la zone d'appui (121 ; 521) présente un évidement (60).

4. Corps de segment selon la revendication 3, **caractérisé en ce que** l'évidement (60) est disposé entre le corps creux (30) et une surface extérieure de la partie support (120, 520) qui se trouve du côté de la première zone d'extrémité de l'élément de montage (10).

5. Corps de segment selon la revendication 3, **caractérisé en ce que** l'évidement (60) est sensiblement parallèle à une ligne de sommet (31) du corps creux (30) présentant une section transversale en forme de U ou de parabole.

6. Corps de segment selon l'une au moins des revendications 1 à 5, **caractérisé en ce que** celui-ci est une pièce réalisée d'un seul tenant.

7. Corps de segment selon l'une au moins des revendications 1 à 6, **caractérisé en ce que** le corps de segment (1, 5) comprend un ressort d'acier (50) inséré de façon interchangeable dans la poche d'insertion (40), qui s'appuie sur la partie opposée (11) de l'élément de montage (10), et l'élément de montage (10) comprend à cet emplacement une échancrure (13) dimensionnée de manière à loger le ressort d'acier (50) de façon antidérapante.

8. Corps de segment selon l'une au moins des revendications 1 à 7, **caractérisé en ce que** la partie support (120) est réalisée sous forme de racloir qui va en se rétrécissant avec une surface extérieure (123) concave et une surface extérieure (124) convexe opposée à celle-ci, la surface extérieure (123) concave étant agencée au-dessus de la première zone d'extrémité de l'élément de montage (10) et la surface extérieure (124) convexe étant agencée au-dessus de la seconde zone d'extrémité.

9. Corps de segment selon la revendication 8, **caractérisé en ce que** la partie support (120) est réalisée en deux pièces avec une première partie support inférieure qui est reliée à la plaque de montage (10) et avec un élément racleur fixé de façon interchangeable.

10. Corps de segment selon l'une au moins des revendications 1 à 9, **caractérisé en ce que** la partie support (520) comprend une zone de réception (525) pour l'application des efforts d'au moins un élément d'usure (70).

11. Corps de segment selon la revendication 10, **caractérisé en ce qu'**une raclette (71) est fixée dans la zone de réception (525), une spatule (72) étant conformée dans la zone de l'extrémité longitudinale de la raclette (71).

12. Corps de segment selon l'une au moins des revendications 1 à 11, **caractérisé en ce qu'**une plaque d'acier (80) est incorporée dans la partie de montage (10).

13. Corps de segment selon l'une au moins des revendications 1 à 12, **caractérisé en ce que** le corps creux (30) présente une section transversale en forme de U ou de parabole.

14. Racloir de courroie transporteuse comportant un support d'acier et un ensemble de corps de segment (1 ; 5) selon l'une des revendications 1 à 13, les corps de segment (1 ; 5) présentant chacun au moins un élément ressort (50) dans la poche d'insertion (40) et étant agencés sur le support d'acier (100) les uns à côté des autres selon son axe longitudinal, des corps de segment (1 ; 5) agencés au centre présentant des éléments ressorts (50) dont la puissance est supérieure à celle des corps de segment (1 ; 5) agencés à l'extérieur.
